# EUROPEAN PATENT APPLICATION

(11) **EP 4 776 275 A1**
(43) Date of publication of application: **15.07.2026**
(21) Application number: 26151677.7
(22) Date of filing: 13.01.2026
(51) Int. Cl.: G10L 15/22

(54) **A COMPUTER IMPLEMENTED METHOD AND A VIRTUAL ASSISTANT SYSTEM**

(30) Priority: 14.01.2025 GB 202500444
(71) Applicant: Vodafone Group Services Limited, Newbury, Berkshire RG14 2FN (GB)
(72) Inventor: MEY, Oliver, London, W2 6BY (GB)
(74) Representative: Boult Wade Tennant LLP

(57) **Abstract**

A computer implemented method and a virtual assistant system are provided. The method comprising: receiving a data stream comprising utterance information associated with at least one person in natural language; updating windowed information within a buffer with utterance information from the data stream; in response to and following the updating of the buffer, processing the windowed information using a NLP module to determine whether the windowed information indicates that an action should be executed by a virtual assistant system; providing an action indicator corresponding to the action to an orchestrator module when it is determined that the windowed information indicates that the action should be executed by the virtual assistant system; using the orchestrator module to cause executing of the action using at least one software module.

## Description

The present disclosure relates to virtual assistant systems which provide assistive actions to users. Aspects of the invention relate to a computer-implemented method and a virtual assistant system.

### BACKGROUND

Virtual assistant systems are software systems which help users with a variety of actions based on the user's input in natural language, which can be through text, voice or other interfaces. To do this, virtual assistant systems await for a "wake word" or "wake phrase" which triggers the virtual assistant to process subsequent natural language input to understand what action the user is asking the virtual assistant system to do.

In certain situations, it is desirable for the virtual assistant system to maintain a context history of a session with the user, which allows the virtual assistant to remember previous interactions or requests to enable the user to follow up on previous requests, thereby providing a more seamless interaction.

A large language model (LLM) may be used in conjunction with or as part of a virtual assistant system to process the user's request and to better analyse the context for executing the requested action. However, as LLMs require large amounts of computing power, it is often impractical to call them frequently, and so this is problematic for providing low latency to users.

### BRIEF SUMMARY OF THE DISCLOSURE

Aspects and embodiments of the invention provide a computer-implemented method and a virtual assistant system as claimed in the appended claims.

According to an aspect of the present invention there is provided a computer-implemented method comprising: receiving a data stream comprising utterance information associated with at least one person in natural language; updating windowed information within a buffer with utterance information from the data stream; in response to and following the updating of the buffer, processing the windowed information using a NLP module to determine whether the windowed information indicates that an action should be executed by a virtual assistant system; providing an action indicator corresponding to the action to an orchestrator module when it is determined that the windowed information indicates that the action should be executed by the virtual assistant system; using the orchestrator module to cause executing of the action using at least one software module.

Optionally, the NLP module comprises an embedding model, wherein the processing of the windowed information comprises: encoding the windowed information into an embedding vector, obtaining a set of reference embedding vectors, the set of reference embedding vectors relating reference information to the action; performing a similarity calculation between the embedding vector and the set of reference embedding vectors; wherein when the similarity calculation indicates the similarity between the embedding vector and at least one embedding vector from the set of reference embedding vectors passes a similarity threshold, it is determined that the information indicates that the action should be executed by the virtual assistant system.

Optionally, the NLP module comprises: an embedding model, an action classifier trained to classify embedding vectors that indicate the action should be executed, wherein the processing of the windowed information comprises: encoding the windowed information into an embedding vector, processing the embedding vector using the action classifier; determining, using the action classifier, if the embedding vector indicates the action should be executed; classifying the embedding vector as a class associated with the action when it is determined the embedding vector indicates the action should be executed; generating the action indicator, wherein the action indicator comprises the class associated with the action.

Optionally, the NLP module comprises a small language model, wherein the small language model is trained to recognise when utterance information within the windowed information indicates that the action should be executed by the virtual assistant system.

Optionally, the buffer comprises a fixed capacity for storing the windowed information.

Optionally, the buffer comprises a time-based buffer configured to store utterance information as the windowed information for a predetermined duration after it is provided to the buffer.

Optionally, as the windowed information of the buffer is updated, the method comprises deleting the oldest utterance information from the buffer, if the buffer is at capacity.

Optionally, the method comprises: processing the windowed information using the NLP module to determine whether the windowed information indicates that at least one additional action should be executed by the virtual assistant system; providing at least one additional action indicator, each corresponding to the at least one additional action, to the orchestrator module when it is determined that the windowed information indicates that the at least one additional action should be executed by the virtual assistant system; using the orchestrator module to cause executing of the at least one additional action using the at least one software module.

Optionally, the action and the at least one additional action comprise different types of actions, wherein the at least one software module comprises software modules which correspond to different types of action, wherein the method comprises using the orchestrator module to cause executing of the action and the at least one additional action using the software modules which correspond to the type of action of the action and the type of action of the at least one additional action.

Optionally, the at least one software module comprises: a large language model; a python interpreter; a large language model-based agent; a retrieval-augmented generation process; a computer program.

Optionally, the method additionally comprises: determining, using the orchestrator module, whether the action can be executed based solely on the utterance information in the data stream and the action indicator; when it is indicated that the action can be executed based solely on the utterance information in the windowed information and the action indicator, providing at least some of the utterance information in the data stream and the action indicator as inputs to a first software module of the at least one software module, and executing the action using the first software module; when it is indicated that further information is required before the action can be executed, providing at least some of the utterance information in the data steam and the action indicator as prompts to a second software module of the at least one software module, the second software module comprising a large language model; processing the prompts using the large language model; extracting further information required to execute the action at an output of the large language model; executing the action using the further information.

Optionally, the method additionally comprises: generating a transcription of the utterance information associated with the at least one person in natural language as the data stream is received; maintaining and updating the transcription of the utterance information as new utterance information is received via the data stream.

Optionally, when it is indicated that further information is required before the action can be executed, the method comprises providing at least part of the transcription to the large language model as a prompt.

Optionally, the method comprises processing the prompt comprising at least part of the transcription using the large language model; extracting at least one of an action input and action metadata at the output of the large language model for causing execution of the action, wherein the at least one of the action input and action metadata is at least part of the further information.

Optionally, the transcription identifies different speakers from the utterance information in the transcription.

Optionally, the method comprises: processing the utterance information using a voice detection model; determining whether the utterance information comprises words spoken by at least one registered voice registered with the voice detection model and whether the utterance information comprises words spoken by at least one unregistered voice not registered with the voice detection model; permitting processing of utterance information within the windowed information using the NLP module for utterance information corresponding to words spoken by the at least one registered voice; prohibiting processing of utterance information within the windowed information using the NLP module for utterance information corresponding to words spoken by the at least one unregistered voice.

Optionally, the data stream comprises at least one of: audio data; text data.

Optionally, the method comprises prohibiting of providing the action indicator corresponding to the action to the orchestrator module if it is determined that the action indicator has been previously provided to the orchestrator module within a predetermined historic time period.

According to an aspect of the present invention, there is provided a virtual assistant system comprising: one or more processors collectively configured to: receive a data stream comprising utterance information associated with at least one person in natural language; update windowed information of a buffer with utterance information from the data stream; in response to and following the updating of the buffer, process the windowed information using a NLP module to determine whether the windowed information indicates that an action should be executed by the system; provide an action indicator to an orchestrator module when it is determined that the windowed information indicates that the action should be executed; use the orchestrator module to cause executing of the action using at least one software module associated with the orchestrator module.

Optionally, the virtual assistant system is configured to perform any method as described herein.

Optionally, the NLP module is quantized.

Optionally, the virtual assistant system additionally comprises one or more of: the NLP module; the orchestrator module; the at least one software module.

Optionally, the virtual assistant system is additionally configured to: receive a text input via a user interface; process the text input using the NLP module to determine whether the text input indicates an auxiliary action should be executed by the virtual assistant system; provide an auxiliary action indicator to the orchestrator module when it is determined that the text input indicates that the auxiliary action should be executed; use the orchestrator module to cause executing of the auxiliary action using at least one software module associated with the orchestrator module.

### BRIEF DESCRIPTION OF THE DRAWINGS

Embodiments of the invention are further described hereinafter, by way of example only, with reference to the accompanying drawings, in which:
FIG. 1A shows a flow diagram illustrating a computer-implemented method according to embodiments of the invention;
FIG. 1B shows a computer-implemented method according to embodiments of the invention;
FIG. 2A shows a NLP module according to embodiments of the invention;
FIG. 2B shows part of a computer-implemented method according to embodiments of the invention;
FIG. 3A shows a NLP module according to embodiments of the invention;
FIG. 3B shows part of a computer-implemented method according to embodiments of the invention;
FIG. 4 shows an NLP module according to embodiments of the invention;
FIG. 5 shows a buffer according to embodiments of the invention.
FIG. 6 shows part of a computer-implemented method according to embodiments of the invention;
FIG. 7 shows a group of software modules according to embodiments of the invention;
FIG. 8A shows an orchestrator module and software modules according to embodiments of the invention;
FIG. 8B shows part of a computer-implemented method according to embodiments of the invention;
FIG. 9A shows part of a computer-implemented method according to embodiments of the invention;
FIG. 9B shows a transcription according to embodiments of the invention.
FIG. 10A shows a flow diagram illustrating part of a computer-implemented method according to embodiments of the invention;
FIG. 10B shows part of a computer-implemented method according to embodiments of the invention.
FIG. 11 shows part of a computer-implemented method according to embodiments of the invention;
FIG. 12 shows a virtual assistant system according to embodiments of the invention;
FIG. 13 shows a virtual assistant system according to embodiments of the invention;
FIG. 14 shows a virtual assistant system according to embodiments of the invention.

### DETAILED DESCRIPTION

In certain situations, it would be beneficial to have a virtual assistant system which follows and understands an entire human conversation between at least two people, and have that virtual assistant system provide assistive actions during and/or after the conversation.

For example, in a healthcare setting it may be useful for a virtual assistant system, which may be called a healthcare provider assistant system, to follow an interview between a healthcare provider and a patient. The virtual assistant system may be configured to assist the healthcare provider by executing the following actions: automatically writing documentation for patient examinations, summarising the interview, searching for information such as symptoms in healthcare documents/resources and generating prescription documents and/or requests. It is beneficial for these actions to be executed in parallel to an ongoing interview between the healthcare provider and the patient.

In another example, during a sales conversation, for example a telephone call or a message based conversation, a virtual assistant system may be useful for executing the following actions: obtaining information about tariffs that are mentioned in the conversation, and generating contracts which the customer could later sign. It would be beneficial for these actions to be executed in parallel to an ongoing conversation between a salesperson and a customer.

In some examples, it may be useful for a user to directly interact with a virtual assistant system during a conversation between a user and at least one person, and for the user to interact with anything generated by the virtual assistant system during the conversation. It is crucial in these examples that the virtual assistant system performs the required actions with minimal latency to avoid the user having to wait for the execution of the action during a conversation. Furthermore, in some situations, the delay in the execution of the action may make the results obsolete, as the conversation may have moved on and the context/content of the conversation may have changed before the virtual assistant system is able to provide results based on the previous part of the conversation.

To provide a virtual assistant system which follows and understands a conversation and provides assistive actions, this can be realised through a virtual assistant system configured to perform a combination of a transcription service that transcribes the spoken words using speech-to-text algorithms and an action trigger service, which may comprise a large language model (LLM) as a component, that takes the transcription as an input and determines all possible signs that a specific action might be required. Those signs can be specific trigger words or phrases or alternatively can be recognized through contextual understanding by the LLM. For example, an LLM may take a piece of the transcription as input in combination with a prompt, that specifies, under which conditions a certain action should be triggered, and the LLM may then attempt to determine all possible action triggers present, provide action inputs and may then attempt to perform those actions.

The problem with this approach is that it requires to continuously input chunks of the transcription into the LLM. To have a real-time user experience, an LLM call every second or with an even higher frequency would be required to ensure low latency for the user.

However, as LLM computation requires a lot of computing power, that would cause high costs and high energy consumption. Additionally, with limited computational resources, the execution of those LLM calls themselves would also have a not negligible latency.

An alternative option to providing a virtual assistant system which follows and understands a conversation and provides assistive actions would be to use an Al model which is able to directly process audio input. This would involve continuously inputting audio chunks into the Al model and that Al model would be instructed similarly to generate action triggers and action inputs if certain conditions are fulfilled. However, the problem with this methodology is the same as above, in that it would require execution of a computationally highly demanding model with a high temporal frequency, which isn't necessarily achievable for all possible scenarios and hardware used for a virtual assistant system.

According to embodiments disclosed herein, there is provided a virtual assistant system capable of tracking and understanding a human conversation and providing assistive actions with minimal latency. Actions, as referred to throughout this description, refers to any specific tasks or operations which the virtual assistant system performs in response to human commands or queries. Sometimes a human will directly command a virtual assistant system to execute a specific action. Virtual assistant systems according to embodiments disclosed herein are configured to recognise when an action is to be executed by processing the utterances of humans to understand the context of a human conversation, in order to recognise when actions should be executed even when the humans haven't directly asked the virtual assistant system to execute an action. Actions performed by the virtual assistant according to embodiments disclosed herein are actions which, excluding any wake action of the virtual assistant system, comprise any of executing commands, retrieving information, automating tasks, understanding context, integrating with services and personalising responses based on user preferences.

According to embodiments disclosed herein, a virtual assistant system is provided which can receive a data stream comprising utterance information associated with at least one person and uses a buffer to obtain windowed information from the data stream. The data stream comprises at least one of: audio data; text data, which comprises the utterance information associated with at least one person. The windowed information is provided to a natural language processing (NLP) module to determine whether the utterance information indicates an action should be executed by the virtual assistant system. The NLP module is configured to determine whether an action should be executed but does not begin the process of executing the action. By limiting the amount of utterance information provided to the NLP module, and limiting the required output from the NLP module, smaller and more specialized language models can be used, which are also less computationally demanding, compared to using a more general purpose language model.

By constraining the inputs and outputs provided to and from the NLP module, low accuracy is avoided (i.e. this avoids false detection of actions or triggering actions when none are required). Constraining the inputs and outputs allows the NLP module to be a highly specialised model instead of a general purpose model, while still maintaining reliability of the results. The NLP module according to embodiments disclosed herein provides an indication that the action should be executed, and optionally additionally provides action inputs and/or action metadata, to an orchestrator module, which then determines the most appropriate way to execute the action as will be described herein.

Since the use of the NLP module according to examples disclosed herein is less computationally heavy, its execution latency is also smaller and can be executed with a high temporal frequency. For example, the updating of the windowed information within the buffer can occur at a frequency of less than 1Hz, although it is not limited to being updated within that range of frequencies.

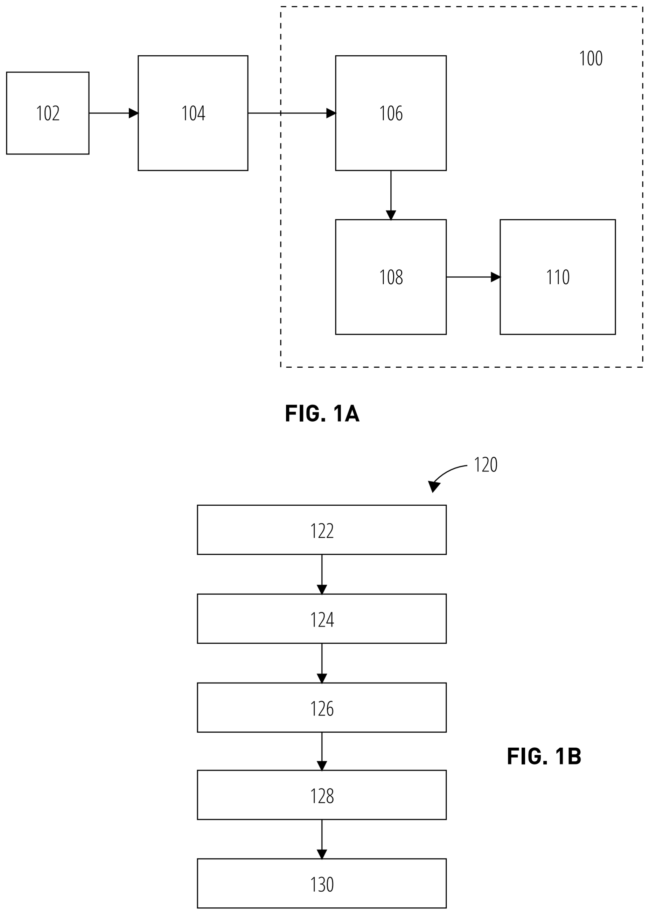

FIG. 1A shows a flow diagram illustrating a computer-implemented method according to embodiments of the invention and FIG. 1B shows a computer-implemented method according to embodiments of the invention.

As shown in FIG. 1A, a data stream 102 is provided to a buffer 104. The data stream 102 comprises utterance information associated with at least one person. The utterance information relates to words spoken, typed or otherwise expressed in natural language, also referred to as ordinary language. Natural language refers to language that has developed naturally as a method of communicating between humans. The utterance information comprises the words, sentences and expressions spoken or typed by the at least one person. The utterance information may comprise a conversation between two or more people.

The buffer 104 comprises windowed information, which is a portion of the utterance information from the data stream 102 that has been windowed, in other words sectioned off, from the rest of the utterance information. As described herein, the size of the windowed information is restricted by a time frame and/or data size.

The windowed information of the buffer 104 is updated with utterance information from the data stream 102. The data stream 102 comprises a continuous flow of data which causes continual updating of the buffer 104 as more utterance information is received.

As shown in FIG. 1A, the windowed information is provided to a natural language processing (NLP) module 106. The NLP module 106 can comprise a pre-trained natural language processing model, which can also be referred to as a natural language processing engine.

The NLP module 106 is configured to process the windowed information in order to determine whether the windowed information indicates that an action should be executed by the virtual assistant system. The NLP module 106 processes the windowed information in response to and following the update of the buffer 104. This means that the NLP module 106 is only called for processing the windowed information when the windowed information has been changed from a previous iteration.

The NLP module 106 processes the entirety of the windowed information in response to the updating of the buffer 104. This means that the NLP module 106 does not wait for a wake-word or wake-phrase before it will process utterance information and begin to determine whether an action should be executed. In other words, the only trigger for causing processing of the windowed information by the NLP module 106 is the updating of the buffer 104.

FIG. 1A also shows an orchestrator module 108. The orchestrator module 108 is configured to receive an action indicator when it is determined by the NLP module 106 that an action is to be executed by the virtual assistant system. The NLP module 106 can be configured to generate the action indicator when it determines an action is to be executed from the processing of the windowed information.

The orchestrator module 108 is configured to manage and coordinate the execution of actions using at least one software module 110, which is associated with the orchestrator module 108. For example, the orchestrator module 108 may be configured to manage and/or coordinate the execution of multiple actions across various software modules 110 which can comprise various systems and/or applications and/or services. The orchestrator module 108 may be associated with the at least one software module 110, or alternatively the at least one software module 110 may be associated with a system or application or service associated with the orchestrator module 108.

FIG. 1A also illustrates a virtual assistant system 100 according to an embodiment. As shown in FIG. 1A, the virtual assistant system 100 may comprise the NLP module 106, the orchestrator module 108 and the at least one software module 110. In other examples the virtual assistant system 100 may also comprise the buffer 104. As will be appreciated from other examples disclosed herein, the components of the virtual assistant system 100 are not necessarily those shown in FIG. 1A, but in these other examples the virtual assistant system 100 may use the components shown in FIG. 1A in order to determine whether it needs to execute an action.

According to embodiments and in accordance with FIG. 1A, there is therefore provided a computer-implemented method 120, for example as shown in FIG. 1B. The method 120 shown in FIG. 1B comprises: receiving 122 a data stream 102 comprising utterance information associated with at least one person in natural language; updating 124 windowed information within a buffer 104 with utterance information from the data stream 102.

The method 120 additionally comprises, in response to and following the updating 124 of the buffer 104, processing 126 the windowed information using an NLP module 106 to determine whether the windowed information indicates that an action should be executed by the virtual assistant system 100.

The method 120 also comprises providing 128 an action indicator corresponding to the action to an orchestrator module 108 when it is determined that the windowed information indicates that the action should be executed by the virtual assistant system. The method 120 also comprises using 130 the orchestrator module 108 to cause executing of the action using at least one software module 110.

According to embodiments disclosed herein, the virtual assistant system 100 is in an active listening state instead of a passive or turned off state during the blocks of the method shown in FIG. 1B. In other words, the virtual assistant system 100 is in a wake state or active state during the blocks of the method shown in FIG. 1B instead of being in a sleep state or passive state. According to an example, the method 120 may additionally comprise waking, or activating, the virtual assistant system 100 prior to receiving 122 the data stream 102. According to another example, the method 120 may additionally comprise waking, or activating, the virtual assistant system 100 after receiving 122 the data stream 102, and prior to updating 124 the windowed information within the buffer 104. The process of waking or activating the virtual assistant system 100 may comprise transitioning the virtual assistant system 100 from a sleep state to a wake state, or from a passive state to a wake state. The process of waking or activating may comprise receiving a user input, for example a wake word input via a microphone, or may comprise another user input such as pressing a button or selecting a UI icon in a user interface.

In an example, the data stream 102 may comprise a conversation in text between two people in a healthcare setting. As the conversation continues, the flow of data from the data stream 102 is provided to the buffer 104, which updates the windowed information stored within the buffer 104. At an arbitrary instance in time, the windowed information may include text from one of the people within the conversation which says "we will prescribe you some medicine for this".

The NLP module 106 processes the windowed information, and determines that an action is to be executed by the virtual assistant system 100. In particular, the NLP module 106 recognises the action of assisting with a prescription for a patient. The NLP module 106 provides an action indicator to the orchestrator module 108 indicating the action to be executed. The orchestrator module 108 module then uses at least one software module 110 to cause executing of the action, as will be described herein later.

According to examples, the NLP module 106 can comprise a NLP model which may comprise a neural network with at least one output layer.

In operation, an input sequence comprising the windowed information comprising utterance information associated with at least one person is input to the NLP module 106. As known in the art, the input sequence may be tokenised by dividing a sequence of words into a plurality of tokens, each token representing a word or sub-word piece of the input sequence. Each token may be assigned a numeric value to generate a vector of values that encodes the words of the input sequence to be input to the NLP model of the NLP module 106.

The NLP model receives the input sequence and generates an encoded vector that represents, or embeds, a meaning of the input sequence. For example, the NLP model may obtain a tokenised input sequence which describes utterance information, such as part of a conversation in natural language, and may generate a contextualised embedding associated with the entities and actions present in the utterance information. In creating the contextualised embedding, the utterance information is transformed into a vector from a vector space with the property that similar content will correspond to vectors that are in proximity to each other. According to some examples, the NLP model or a voice detection model, can be configured create contextualised embeddings for other types of information. For example, the NLP model could map voices such that similar ones have embeddings that are close to each other while very different voices have embeddings that have a larger mutual distance.

In this way, the NLP model can determine that an action is to be executed by the virtual assistant system 100. The same action may be described in different words by different users however the NLP module 106 is able to extract the underlying meaning of the utterance information and therefore the different descriptions of the same action would result in similar encoded vectors recognising the underlying meaning of the input sequences is the same.

The NLP module 106 may be configured to recognise predetermined actions known to be performable by the virtual assistant system 100 and recognise when these actions are to be executed based on the utterance information. For example, the NLP module 106 may be trained using a set of predetermined actions which the virtual assistant system 100 is configured to execute. Predetermined actions which the virtual assistant system 100 is configured to execute may be actions which the orchestrator module 108 may be configured to execute using at least one software module 110, where it is known that the at least one software module 110 is capable of executing the action.

According to examples, the NLP module 106 may be configured to recognise when the utterance information indicates an action should be executed which isn't in the set of predetermined actions which the virtual assistant system 100 is configured to execute. As the NLP module 106 can still understand the underlying meaning in natural language behind the action which isn't in the set of predetermined actions, it can still provide an action indicator associated with this action to the orchestrator module 108. The orchestrator module 108 may be able to cause execution of this action not in the predetermined list by consulting a software module 110, such as a service, external to the virtual assistant system 100 as will be described herein.

The NLP model according to examples described herein may comprise a generative neural network that has been trained on a large training set of natural language texts. Examples of training corpora used to train the NLP model include Wikipedia pages and BooksCorpus. Examples of NLP models include a Generative Pre-Trained Transformer, GPT, architecture model; a Text-to-Text Transfer Transformer, T5, model; Pathways Language Model, PaLM; Large Language Model Meta AI, LLaMA; Megatron-LM model; or another generative large language model. As will be described herein, the NLP model may alternatively comprise a small language model. Example small language models include, but are not limited to, the Phi-3 and Phi-4 models from Microsoft.

It is to be understood that even though a large language model may be used as the NLP module 106, its use here is more restricted than generally providing a prompt to a general purpose large language model and allowing the model to recognise action or actions, execute the action including retrieval of information, processing of previous utterances and generating natural language outputs for example. According to examples, the NLP module 106 is restricted to processing utterance information within the windowed information to determine if an action is to be executed and providing an action indicator.

According to examples, the action indicator provided by the NLP module 106 may comprise data indicating: the action to be executed, and optionally may comprise: data indicating the entities related to the action recognised by the NLP module 106 and/or action input generated or recognised by the NLP module 106. The action indicator may be output from the NLP module 106 in a predetermined format suitable for the orchestrator module 108. For example the action indicator may be provided as a computer readable data structure which specifies in computer readable language the action which is to be executed. A fine-tuning process may be performed in which the NLP model is trained to provide the action indicator in the predetermined format. The predetermined format may comprise a vector embedding representing the action indicator, and may contain parameters specifying the action type, and may optionally identify entities associated with the action, corresponding to the meaning of the natural language description of the action and/or may optionally comprise action input generated or recognised by the NLP module 106.

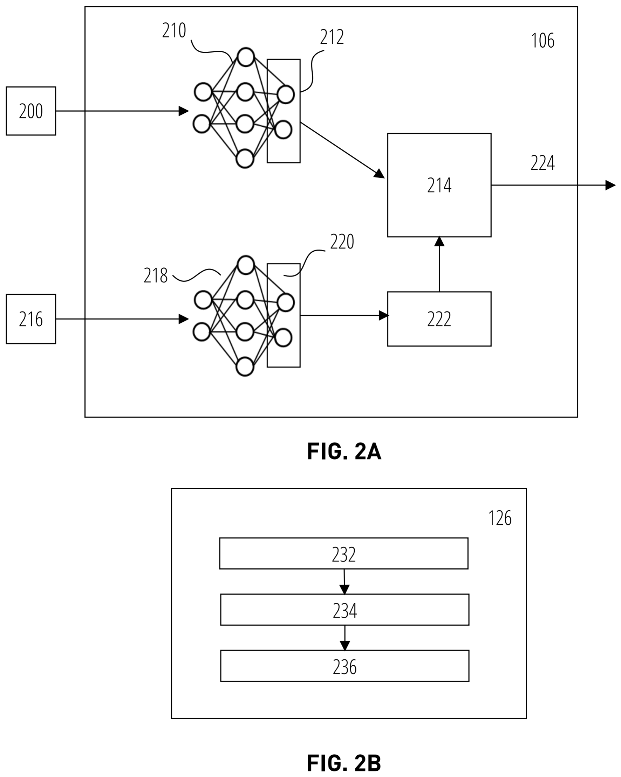

FIG. 2A shows an NLP module 106 according to embodiments of the invention, which shows the processing 126 of the windowed information. As shown in FIG. 2A, windowed information 200 is received at an embedding model 210. The embedding model 210 is configured to encode the windowed information into an embedding vector 212.

The NLP module 106 is configured to obtain a set 222 of reference embedding vectors 220. The set 222 of reference embedding vectors 220 relate reference information 216 to the action.

FIG. 2A illustrates schematically the NLP module 106 receiving the reference information 216, and using a embedding model 218 to obtain reference embedding vector 220. It is to be understood embedding model 218 may be pre-trained with reference information 216 to obtain the set 222 of reference embedding vectors 220. The reference information 216 can comprise labelled data comprising different portions of utterances linked to predetermined actions. Embedding model 218 may be the same model as embedding model 210, but may be a different instance of the model.

The NLP module 106 is configured to perform a similarity calculation 214 between the embedding vector 212 and the set 222 of reference embedding vectors 220. When the similarity calculation indicates the similarity between the embedding vector 212 and at least one embedding vector 220 from the set 222 of reference embedding vectors 220 passes a similarity threshold, it is determined that the information indicates that the action should be executed by the virtual assistant system 100. As schematically shown in FIG. 2A, the set 222 of reference embedding vectors 220 and the embedding vector 212 are compared using the similarity calculation and an action indicator 224 is provided indicating the action is to be executed.

The similarity calculation may be any appropriate similarity calculation such as: Euclidean distance, cosine similarity, dot product.

According to examples herein and in accordance with FIG. 2A, FIG. 2B shows part of a computer-implemented method 100 according to embodiments of the invention.

The NLP module 106 comprises an embedding model 210. FIG. 2B shows an example of the processing 126 of the windowed information 200. In FIG. 2B, the processing 126 comprises:
encoding 232 the windowed information 200 into an embedding vector 212; obtaining 234 a set 222 of reference embedding vectors 220, the set 222 of reference embedding vectors 220 relating reference information 216 to the action.

The processing 126 additionally comprises: performing 236 a similarity calculation 214 between the embedding vector 212 and the set 222 of reference embedding vectors 220.

When the similarity calculation indicates the similarity between the embedding vector 212 and at least one embedding vector 220 from the set 222 of reference embedding vectors 220 passes a similarity threshold, it is determined that the information indicates that the action should be executed by the virtual assistant system 100.

According to an example, the similarity threshold may be a value that indicates a score of 80% of the maximum possible similarity. In other examples the score may be lower, for example 70%, and in others it may be higher, such as 90%. The score can be fine-tuned depending on user preferences and also for different actions. According to examples disclosed herein, the NLP module 106 is configured to just determine whether an action is to be executed, in other words that the utterances comprise information which indicates an action could be executed to assist the users of the virtual assistant system 100.

According to an example, obtaining the threshold values comprises calculating the average distance between the reference embeddings of different actions. A phrase from the windowed information 200, following its encoding into an embedding vector 212, might then be sorted to a particular action class, when its distance to a particular action is smaller than the average distance of the reference embeddings of different actions.

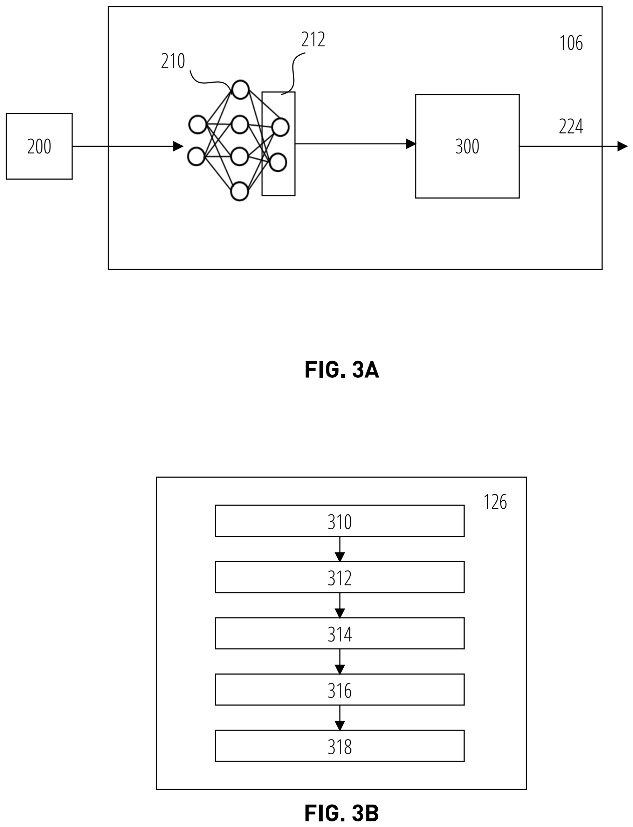

FIG. 3A shows a NLP module 106 according to embodiments of the invention.

As shown in FIG. 3A, according to an embodiment of the invention, the NLP module 106 comprises an embedding model 210; an action classifier 300.

The action classifier 300 is trained to classify embedding vectors 212 that indicate the action should be executed.

As described herein, the embedding model 210 is configured to receive the input sequence, which may comprise a tokenised version of the windowed information 200, and generates an embedding vector 212 that represents, or embeds, a meaning of the input sequence.

As shown in FIG. 3A, the embedding vector 212 is then processed using the action classifier 300.

The action classifier 300 is trained to receive embedding value inputs and output specific action indicator classes, which may be provided as computer readable data structures. For example, the action classifier 300 is trained on a set of embedding value inputs which are labelled with predetermined action classes. Any appropriate training method can be used, for example predicted classes based on the embedding value inputs may be generated, the loss (or cost) calculated and then an appropriate optimisation algorithm used to reduce the loss, repeating the process as necessary until the action classifier's performance is satisfactory.

Using the action classifier 300, it is therefore determined if the embedding vector 212 indicates the action should be executed, and the embedding vector 212 is then classified as a class associated with the action when it is determined the embedding vector 212 indicates the action should be executed. The action classifier 300 then generates the action indicator 224, wherein the action indicator 224 comprises the class associated with the action. For example, the action indicator 224 is provided as a computer readable data structure.

For example, the windowed information 200 may include an utterance as follows: "we will prescribe you some medicine for this". The action classifier 300 may be trained to recognise this as an action class designated "drug prescription generation", and provide this as the action indicator 224 when it recognises the meaning of the utterance.

As another example, the windowed information 200 may include an utterance as follows: "during this call we'll take a look at different tariffs for you". The action classifier may be trained to recognise this as an action class designated "tariff retrieval", and provide this as the action indicator 224.

According to some examples, the NLP module 106 may be configured to recognise when an action is to be executed, but cannot find an associated class using the action classifier 300. For example, the NLP module 106 may recognise from the underlying meaning of the windowed information 200 that it indicates an action is to be executed, but cannot find a class to assign the windowed information 200 to. According to an example, the action classifier 300 is configured to classify the embedding vector 212 as a class which indicates an unknown action.

FIG. 3B shows part of a computer-implemented method 120 according to embodiments of the invention, and in accordance with FIG. 3A.

As described herein, the NLP module 106 comprises: an embedding model 210, an action classifier 300 trained to classify embedding vectors 212 that indicate the action should be executed. FIG. 3B shows an example of the processing 126 of the windowed information 200 of method 120. As shown in FIG. 3B, the processing 126 of the windowed information 200 comprises:
encoding 310 the windowed information 200 into an embedding vector 212; processing 312 the embedding vector 212 using the action classifier 300.

The method 120 additionally comprises: determining 314, using the action classifier 300, if the embedding vector 212 indicates the action should be executed; classifying 316 the embedding vector 212 as a class associated with the action when it is determined the embedding vector 212 indicates the action should be executed; generating 318 the action indicator 224, wherein the action indicator 224 comprises the class associated with the action.

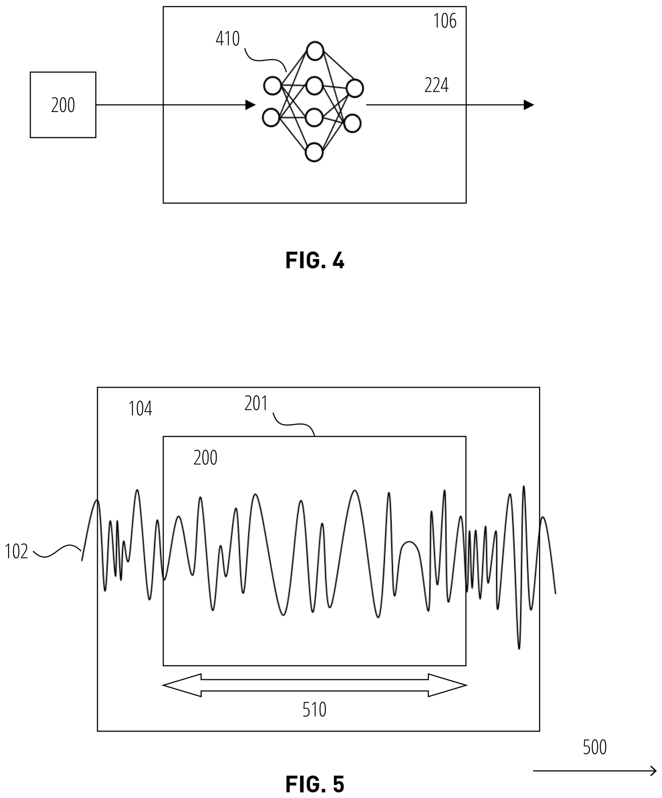

FIG. 4 shows an NLP module 106 according to embodiments of the invention.

According to the example shown in FIG. 4, the NLP module 106 comprises a small language model 410 (SLM).

The SLM 410 is trained to recognise when utterance information within the windowed information 200 indicates that the action should be executed by the virtual assistant system 100.

The SLM 410 comprises less parameters than LLMs. For example edge LLMs are usually below 10 billion parameters. An SLM 410 in accordance with embodiments of the invention may comprise a few hundred million parameters, or less. For example the SLM 410 may comprise 500 million parameters or less.

SLMs 410 can be used in embodiments of the invention as there isn't a requirement to have the full text generation capability of language models. In some examples, the NLP module 106 is configured to only output a number that indicates which action should be executed. For example, at least the final layer of the standard model of the SLM 410 may be replaced to be configured for classification, e.g. just having n dense nodes at the output with n equals the number of classes for the classification task. In other examples, the SLM 410 is configured to generate text at the output, where the generated text is constrained to output only text in a specific format that can be used for classification. For example the text can be constrained to follow a certain json format with one key corresponding to the class, another optional key where it can generate optional action input, and another optional key where it can identify entities recognised in the windowed information 200.

When the SLM 410 is trained using a suitable dataset to classify the windowed information 200, it may lose its prior general purpose text generation capabilities. However as the purpose of the NLP module 106 is to only recognise action triggers and output action indicators, this is not a disadvantage for the present invention.

According to examples, the SLM 410 is configured to classify the windowed information 200 as a class associated with the action when it is determined the windowed information 200 indicates the action should be executed. According to examples, the SLM 410 is configured to generate an action indicator 224 according to examples described herein.

FIG. 5 shows a buffer 104 according to embodiments of the invention. As shown in FIG. 5, the buffer 104 comprises windowed information 200. The window 201 of the windowed information 200 is represented as a rectangle within buffer 104 in FIG. 5. The window 201 may be referred to as a rolling window, where the data of the data stream 102 moves relative to the window as time progresses. As shown in FIG. 5, data stream 102 runs through the buffer 104 in the direction of time arrow 500, which denotes the direction of time progressing. The window 201 of the windowed information 200 remains static relative to time, so that as new data from the data stream 102 enters the start of the window 201 (the left hand side in FIG. 5), the oldest data is removed from the window 201 as the data stream 102 advances in the direction of time arrow 500. According to examples, as the windowed information 200 of the buffer 104 is updated, the method 120 comprises deleting the oldest utterance information from the buffer 104, if the buffer 104 is at capacity.

As shown in FIG. 5, the buffer 104 comprises a fixed capacity 510 for storing the windowed information 200. The buffer 104 can comprise a time-based buffer, configured to store utterance information as the windowed information 200 for a predetermined duration after it is provided to the buffer 104. In some examples, the fixed capacity 510 corresponds to a fixed amount of data that the buffer 104 can store in the windowed information 200.

As shown in FIG. 5, the buffer 104 is schematically represented as being larger than the window 201 of the windowed information 200. According to examples, the buffer 104 is larger than the capacity of the windowed information 200, which allows for any pre-processing or post-processing of the data stream 102 as may be required, or stacking/queuing for entering the data into the windowed information 200, and conversely deleting the data from the windowed information 200.

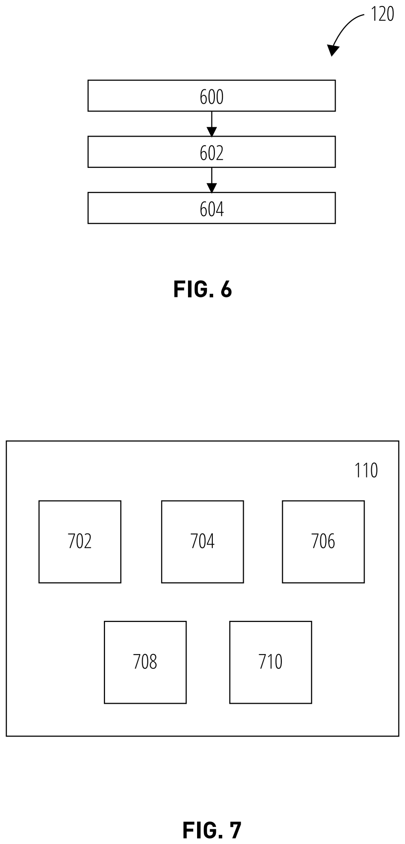

FIG. 6 shows part of a computer-implemented method 120 according to embodiments of the invention.

The blocks shown in FIG.6 may be carried out in parallel to the blocks of FIG. 1 and other FIGs showing method 120 or parts of method 120. For example after block 122 and block 124, the blocks shown in FIG. 6 may be performed in parallel to blocks 126, 128, 130. Alternatively, the blocks shown in FIG. 6 may be performed after blocks 126, 128 and 130 have been carried out.

As shown in FIG. 6, according to examples, the method 120 comprises processing 600 the windowed information 200 using the NLP module 106 to determine whether the windowed information 200 indicates that at least one additional action should be executed by the virtual assistant system 100. The method 120 also additionally comprises providing 602 at least one additional action indicator, wherein each of the at least one additional action indicator corresponds to the at least one additional action, to the orchestrator module 108 when it is determined that the windowed information 200 indicates that the at least one additional action should be executed by the virtual assistant system 100. The method 120 also comprises, according to the example shown in FIG. 6, using 604, the orchestrator module 108 to cause executing of the at least one additional action using the at least one software module 110.

According to embodiments disclosed herein, multiple actions may be executed in response to recognising that the windowed information 200 indicated that multiple actions should be executed. The methods of processing the windowed information 200 using the NLP module 106 are capable of recognising multiple actions that are to be executed, and in some examples the windowed information 200 may be processed several times to determine if there are different actions to be executed.

According to embodiments, the action and the at least one additional action comprise different types of actions. In some examples, different types of actions can be performed by the same software module from the at least one software module 110. According to some examples, the at least one software module 110 comprises software modules 110 which correspond to different types of action, and the method 120 comprises using the orchestrator module 108 to cause executing of the action and the at least one additional action using the software modules 110 which correspond to the type of action of the action and the type of action of the at least one additional action. According to examples, each software module 110 may correspond to a set of different types of action. Some action types may be executable by multiple different software modules 110, and the orchestrator module 108 is configured to select which software module 110 to use to execute the action according to the demand on different software modules 110 or other factors.

For example, the windowed information 200 may contain the utterance: "we will prescribe you some medicine for this and book you in for a follow-up appointment".

The NLP module 106 may determine two different action types are to be executed based on the utterance. For example, one action type may be "drug prescription generation" and another action type may be "book appointment" and will provide action indicators 224 for these to the orchestrator module 108. The orchestrator module 108 module according to examples is configured to assign the "drug prescription generation" to an execution pipeline that comprises a large language model, and the "book appointment" action type to a computer program arranged to interact with an appointment booking service.

FIG. 7 shows a group of software modules according to embodiments of the invention. According to examples, the at least one software module 110 comprises: a large language model 702; a python interpreter 704; a large language model-based agent 706; a retrieval-augmented generation process 708; a computer program 710. The at least one software module 110 is not limited to the modules shown in FIG. 7, and in some examples the at least one software module 110 comprises multiple software modules 110 of the same type.

Depending on the action to be executed and the information present in the data stream 102, the orchestrator module 108 may choose different software modules 110 to execute the action.

In some examples, the orchestrator module 108 may determine that the action cannot be executed based solely on the information within the data stream 102. This may also include examples where the type of the action can't be identified. In these examples, the orchestrator module 108 may provide the action indicator 224, as well as any other information determined to be important, such as entities identified from the utterance information, action inputs and/or action metadata identified by the NLP module 106 or orchestrator module 108 to a software module 110 as prompts to a software module 110 configured to further process the utterance information and retrieve information as required. This software module 110 may for example be a large language model configured to process prompts input to it, retrieve any relevant information and generate an output in order to execute the action or cause execution of the action. The large language model is therefore arranged to be capable of more advanced processing than the NLP module 106, which is configured to just recognise action triggers in order to provide low latency recognition of actions to be executed. Despite the requirement to use a large language model to execute some actions, which will likely introduce latency to the execution of the action, many actions can be performed more quickly by using the NLP module 106 to recognise actions to be executed and using less complex software modules 110 to execute the actions. This is therefore advantageous compared to using a large language model to recognise and execute every action, which would require large amounts of computing resources and time to execute actions.

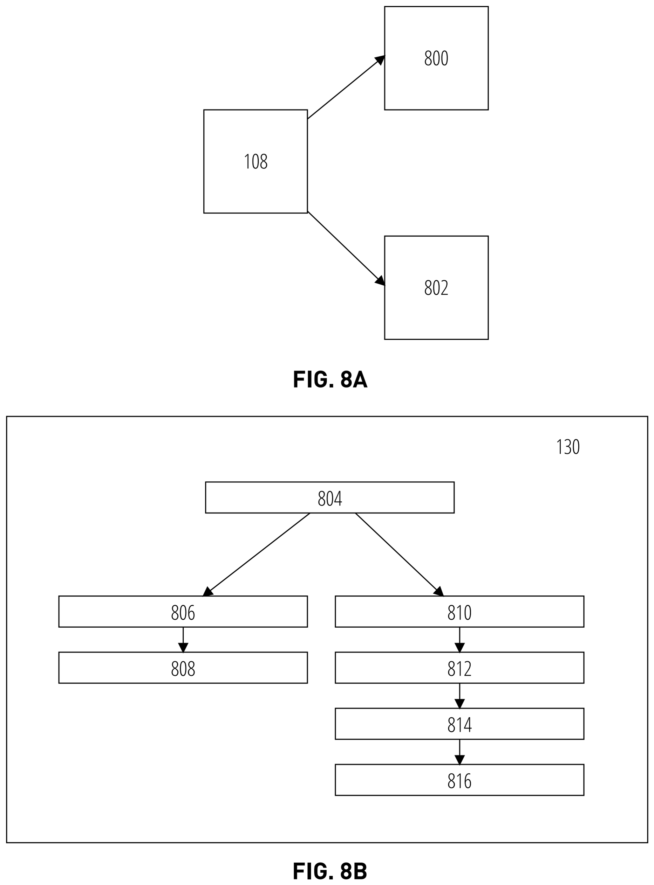

FIG. 8A shows an orchestrator module 108 and software modules 800, 802 of the at least one software module 110 according to embodiments of the invention.

FIG. 8B shows part of a computer-implemented method 120 according to embodiments of the invention, using the orchestrator module 108 and software modules 800, 802 shown in FIG. 8A.

In particular, FIG. 8B shows an example of using 130 the orchestrator module 108 to cause executing of the action using the at least one software module 110. As shown in FIG. 8B, the method additionally comprises: determining 804, using the orchestrator module 108, whether the action can be executed based solely on the utterance information in the windowed information 200 and the action indicator 224.

The method as shown in FIG. 8B then branches according to whether the action can be executed based solely on the utterance information in the windowed information 200 and the action indicator 224.

When it is indicated that the action can be executed based solely on the utterance information in the windowed information 200 and the action indicator 224, the method continues with providing 806 at least some of the utterance information in the windowed information 200 and the action indicator 224 as inputs to a first software module 800 of the at least one software module 110, and executing 808 the action using the first software module 800.

When it is indicated that further information is required before the action can be executed, the method continues with providing 810 at least some of the utterance information in the data stream 102 and the action indicator 224 as prompts to a second software module 802 of the at least one software module 110, the second software module 802 comprising a large language model. The method 120 continues with processing 812 the prompts using the large language model; extracting 814 further information required to execute the action at an output of the large language model; executing 816 the action using the further information.

To determine whether the action can be executed solely on the utterance information in the windowed information 200, the orchestrator module 108 may be configured, for example using computer program instructions, to seek the required information based on the action type indicated by the action indicator 224, and may analyse the windowed information 200 to match the required information for the action type to the utterance information in the data stream 102. The orchestrator module 108 may use the NLP module 106 to analyse the utterance information in the windowed information 200, or another language model. Alternatively or in addition to this, according to an example the action indicator 224 may indicate the required information to complete the action, and the orchestrator module 108 may use the NLP module 106 or another language model to analyse the utterance information in the windowed information 200 for retrieval of the information.

In an example, the utterance information in the windowed information 200 may state "we will book you in with an appropriate specialist for your injury".

The NLP module 106 in this example recognises that an action is to be executed. In particular, it recognises the action as being "book an appointment with a specialist".

The orchestrator module 108 causes the utterance information of the windowed information 200 to be analysed, to determine if the information in the data stream 102 can solely be used to cause the action to be executed. When the utterance information in the windowed information 200 has been analysed, it is determined that the "injury" referred to is a broken bone. From this, it is determined that all information required to execute the action with the at least one software module 110 has been obtained. For example, the action indicator, which indicates that booking an appointment with a specialist is required, along with the action input information that there is a broken bone injury, is provided to a computer program 710 of the at least one software module 110 which is configured to retrieve the schedule of a fracture clinic and book an appointment.

According to examples, when determining whether the action can be executed solely on the utterance information in the windowed information 200, it may be determined that information outside of the windowed information 200 is required to execute the action.

For example, the utterance information in the windowed information 200 may state some symptoms provided by a human.

The NLP module 106 in this example recognises that an action is to be executed. In particular, it recognises the action as being "find illness associated with symptoms".

The orchestrator module 108 recognises that the action type of finding an illness cannot be done solely based on the utterance information within the windowed information 200, because it requires a deeper understanding of the context of the utterance information and/or information retrieval which goes beyond what is easily accessible by the virtual assistant system 100. In some examples, the orchestrator module 108 may be configured to recognise the action type of finding an illness as always not capable of being executed solely on the utterance information in the windowed information 200.

When it is indicated that further information is required before the action can be executed, at least some of the utterance information in the data stream 102 and the action indicator 224 identifying that finding an illness is requested are provided as prompts to the second software module 802 of the at least one software module 110, the second software module 802 comprising a large language model. The at least some of the utterance information in the data stream can include utterance information within the windowed information 200, and/or other utterance information within the data stream 102.

The prompts can then be processed using the large language model, and further information required to execute the action can be extracted at an output of the large language model. Using the further information, the action can be executed. For example this can include identifying the illness using information retrieved and/or analysed by the large language model. Alternatively, the large language model may signal that an illness cannot be identified based on the symptoms given, or may give a possible list of illnesses and may request further input.

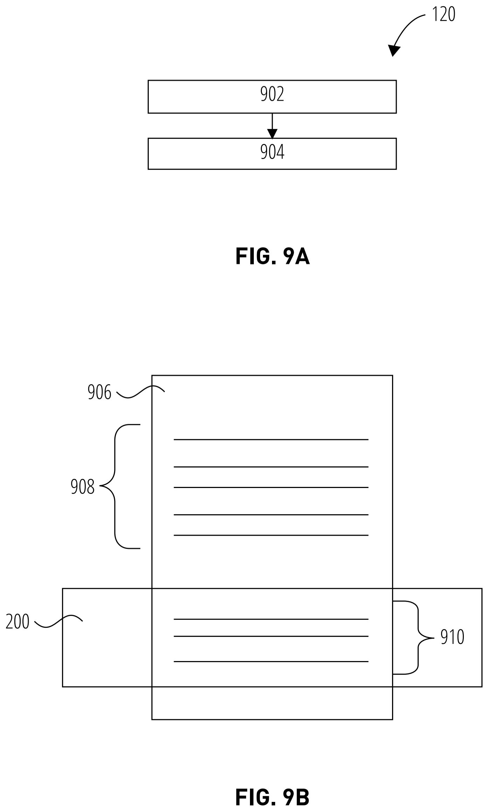

As described herein, embodiments of the invention provide a virtual assistant system 100 which is capable of tracking and understanding a human conversation. According to examples, to further assist in tracking and understanding the conversations, the computer-implemented method 120 according to examples disclosed herein further comprises generating 902 a transcription of the utterance information associated with the at least one person in natural language as the data stream 102 is received. The method 120 can also comprise maintaining and updating 904 the transcription of the utterance information as new utterance information is received via the data stream 102. FIG. 9A shows part of a computer-implemented method 120 according to embodiments of the invention including the generating 902 of the transcription and the maintaining and updating 904. These blocks can be performed at any appropriate moment in time in conjunction with other blocks of computer-implemented method 120 according to examples disclosed herein. Beneficially, a full record of the conversation can be kept whilst the NLP module 106 only retains part of the conversation for processing as the windowed information.

According to examples, when it is indicated that further information is required before the action can be executed as described with reference to FIG. 8B, the method additionally comprises providing at least part of the transcription to the second software module 802 as a prompt for the large language model of the second software module 802.

According to examples, the method 120 can further comprise processing the prompt comprising at least part of the transcription using the large language model and extracting at least one of an action input and action metadata at the output of the large language model for causing execution of the action. The at least one of the action input and action metadata is provided as at least part of the further information.

FIG. 9B shows an example transcription 906 according to embodiments of the invention. The transcription 906 shows multiple lines of text. Part of the transcription 906 forms the windowed information 200. As previously mentioned, the transcription 906 can provide a full record of the utterance information provided by the data stream 102, in other words the entire conversation recorded by the data stream 102, whereas the windowed information 200 retains a portion of utterance information provided by the data stream 102, in other words it retains only part of the conversation.

According to embodiments, the transcription 906 identifies different speakers from the utterance information in the transcription. For example, the transcription 906 shown in FIG. 9B identifies utterance information from a first speaker 908 and a second speaker 910. This is accomplished using known techniques to recognise different voices. For example, features may be extracted from the voices, including frequency patterns and temporal dynamics, and in some examples may be compared to voice profiles associated with the virtual assistant system 100. In some examples, the method 120 may comprise distinguishing a voice associated with a voice profile (or voice registered) from a voice not associated with a voice profile (or a voice not registered).

According to examples disclosed herein, it may be beneficial to restrict the ability for utterance information to be processed according to who is associated with the utterance information.

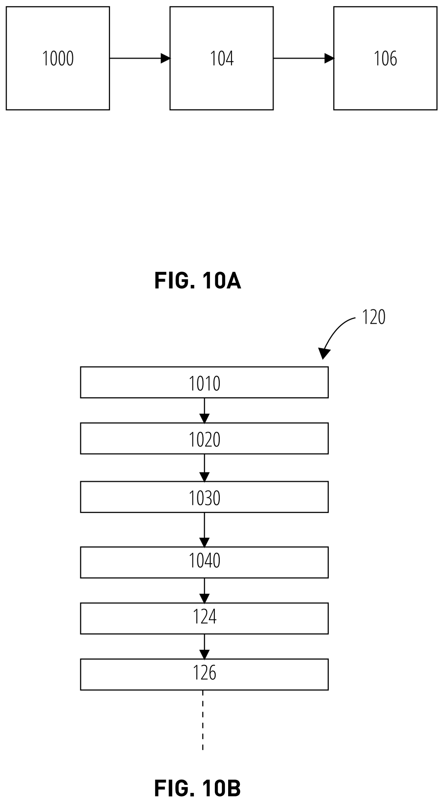

FIG. 10A shows a flow diagram illustrating part of a computer-implemented method 120 according to embodiments of the invention.

For example, where the data stream 102 comprises audio data, the data stream 102 may be processed using a voice detection model 1000 prior to being provided to the buffer 104 and subsequently processed by NLP module 106.

FIG. 10B shows part of a computer-implemented method according to embodiments of the invention and in accordance with FIG. 10B.

The method 120 comprises processing 1010 the utterance information using the voice detection model 1000; determining 1020 whether the utterance information comprises words spoken by at least one registered voice registered with the voice detection model and whether the utterance information comprises words spoken by at least one unregistered voice not registered with the voice detection model.

The method further comprises permitting 1030 processing of utterance information within the windowed information using the NLP module for utterance information corresponding to words spoken by the at least one registered voice; and prohibiting 1040 processing of utterance information within the windowed information using the NLP module for utterance information corresponding to words spoken by the at least one unregistered voice.

As shown in FIG. 10A and FIG. 10B, the blocks shown in FIG. 10B can be carried out prior to the updating 124 of the windowed information 200 and the processing 126 of the windowed information 200. The blocks of updating 124 and the processing 126 are shown in FIG. 10B for illustration purposes. The dashed line represents the further blocks of method 120 which are performed subsequent to block 126 as described herein.

This beneficially enables the method 120 to be used in situations where it is important to distinguish between speakers in order to provide correct information for processing and to prevent unnecessary wastage of computing power of the virtual assistant system 100. For example, it may be beneficial in a healthcare setting or a sales setting to only process the voice of the healthcare provider or the salesperson. This prevents other people in the conversation from overloading the virtual assistant system 100 with spurious utterances or incorrect utterances. Instead the healthcare provider or salesperson, who may be trained to use the virtual assistant system 100, can modify or summarise the information provided to them in the conversation for input for processing by the NLP module 106.

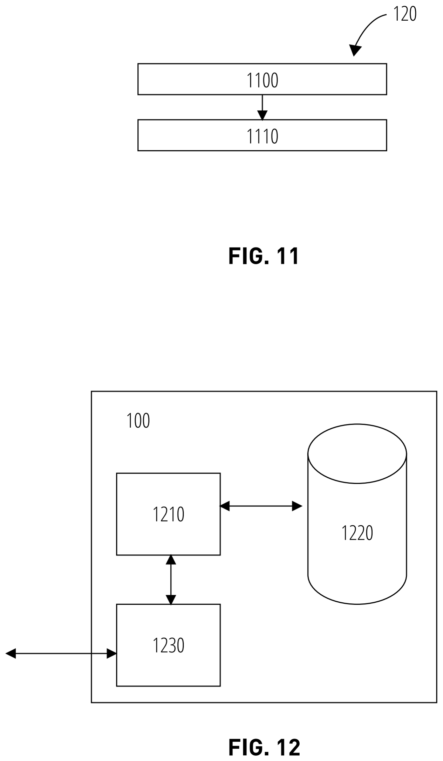

FIG. 11 shows part of a computer-implemented method 120 according to embodiments of the invention. The method 120 according to embodiments disclosed herein can additionally comprise prohibiting 1110 of providing the action indicator 224 corresponding to the action to the orchestrator module if it is determined 1100 that the action indicator has been previously provided to the orchestrator module within a predetermined historic time period. This may be beneficial to prevent repetitive processing of utterance information and providing of action indicators if utterance information overlaps between different instances of the windowed information 200. The historic time period can be tuned according to user preferences in order to reduce computational load.

FIG. 12 shows an example of a virtual assistant system 100 according to embodiments of the invention, operable to implement the described methods according to embodiments of the invention. Virtual assistant system 100 includes processing means 1210, which may be one or more electronic processing device 1210 which operably executes computer-readable instructions. Memory means 1220 are provided as part of the virtual assistant system 100, which may be one or more memory device 1220. The memory means 1220 is electrically coupled to the processing means 1210. The memory means 1220 is configured to store instructions, and the processing means 1210 is configured to access the memory means 1220 and execute the instructions stored thereon. The virtual assistant system 100 in FIG. 12 additionally comprises an input-output interface 1230 for receiving data and outputting data.

The memory device 1220 can comprise computer program instructions to perform a method or implement a device as described herein. For example, the program instructions when executed may implement computer-implemented method 120. Although illustrated as a single device, the virtual assistant system 100 shown in FIG. 12 can be a distributed, or non-local, system.

In some examples, the virtual assistant system 100 comprises one or more processors 1210, and accesses memory device 1220 as an external component not part of the system for executing the computer program instructions stored thereon to perform a method or implement a device as described herein. The virtual assistant system 100 may access the input-output interface 1230 as an external component not part of the system.

According to embodiments disclosed herein, a virtual assistant system is provided which comprises: one or more processors 1210 collectively configured to: receive a data stream 102 comprising utterance information associated with at least one person in natural language;

update windowed information 200 of a buffer 104 with utterance information from the data stream; in response to and following the updating of the buffer 104, process the windowed information 200 using an NLP module 106 to determine whether the windowed information 200 indicates that an action should be executed by the system 100; provide an action indicator 224 to an orchestrator module 108 when it is determined that the windowed information 200 indicates that the action should be executed; use the orchestrator module 108 to cause executing of the action using at least one software module 110 associated with the orchestrator module 108.

The virtual assistant system 100 is configured to perform any of the computer-implemented methods 120 described herein.

According to some examples, the NLP module 106 is quantized. In particular, when the NLP module 106 comprises a neural network, its weights can be made quantized. Model quantization is a way to drastically decrease computational demand of a neural network while at the same time not losing much accuracy. For example, the float32 model weights could be quantized to int4 (or int1, int2, int3, int 5, int6 or combined ways where some weights have a stronger quantization scheme than others). Also the LLM of the at least one software module 110 or other software modules of the at least one software module 110 may be quantized to decrease computational demand and execution latency.

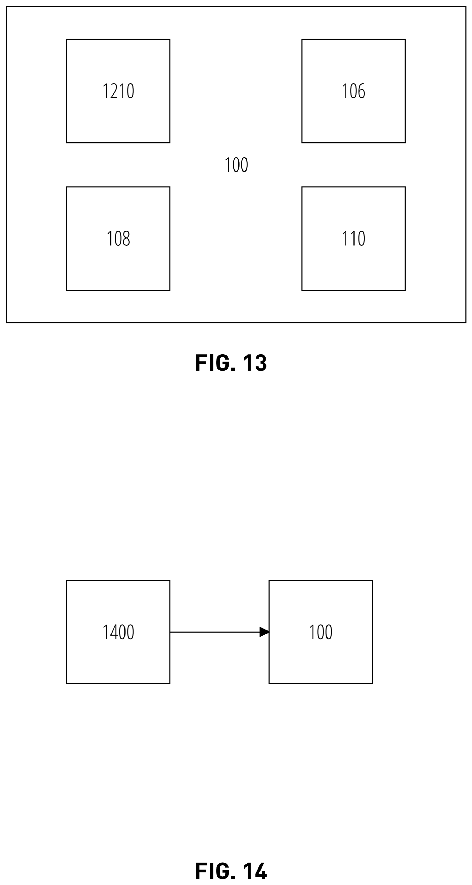

FIG. 13 shows a virtual assistant system 100 according to embodiments of the invention. In FIG. 13, in addition to the one or more processors 1210, the virtual assistant system additionally comprises one or more of: the NLP module 106; the orchestrator module 108; the at least one software module 110. In other examples the virtual assistant system 100 may comprise the buffer 104. Although FIG. 13 shows the NLP module 106, orchestrator module 108 and at least one software module 110 as being part of the system 100, the embodiments according to this invention are not limited as such and any combination of the components shown in FIG. 13 can form the system 100.

FIG. 14 shows a virtual assistant system 100 according to embodiments of the invention. In the example shown in FIG. 14, the virtual assistant system 100 is additionally configured to: receive a text input via a user interface 1400. The text input can be processed using the NLP module 106 to determine whether the text input indicates an auxiliary action should be executed by the virtual assistant system 100. An auxiliary action indicator can be provided to the orchestrator module 108 when it is determined that the text input indicates that the auxiliary action should be executed. The orchestrator module 108 can then be used to cause executing of the auxiliary action using at least one software module 110 associated with the orchestrator module 108.

This enables a user to input separate queries in parallel to an ongoing conversation captured by the data stream 102. For example, whilst a healthcare provider is interviewing a patient, and that conversation is being provided as the data stream 102 to the buffer 104 for use with the virtual assistant system 100, the healthcare provider may wish to input a separate query or a supplementary query which isn't discussed in the conversation. This is enabled in this example by providing the text input via the user interface 1400.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

The following numbered clauses provide further illustrative examples.
1. A computer-implemented method comprising:
   receiving a data stream comprising utterance information associated with at least one person in natural language;
   updating windowed information within a buffer with utterance information from the data stream;
   in response to and following the updating of the buffer, processing the windowed information using a NLP module to determine whether the windowed information indicates that an action should be executed by a virtual assistant system;
   providing an action indicator corresponding to the action to an orchestrator module when it is determined that the windowed information indicates that the action should be executed by the virtual assistant system;
   using the orchestrator module to cause executing of the action using at least one software module.
2. The method of clause 1, wherein the NLP module comprises an embedding model, wherein the processing of the windowed information comprises:
   encoding the windowed information into an embedding vector,
   obtaining a set of reference embedding vectors, the set of reference embedding vectors relating reference information to the action;
   performing a similarity calculation between the embedding vector and the set of reference embedding vectors;
   wherein when the similarity calculation indicates the similarity between the embedding vector and at least one embedding vector from the set of reference embedding vectors passes a similarity threshold, it is determined that the information indicates that the action should be executed by the virtual assistant system.
3. The method of clause 1, wherein the NLP module comprises: an embedding model, an action classifier trained to classify embedding vectors that indicate the action should be executed, wherein the processing of the windowed information comprises:
   encoding the windowed information into an embedding vector,
   processing the embedding vector using the action classifier;
   determining, using the action classifier, if the embedding vector indicates the action should be executed;
   classifying the embedding vector as a class associated with the action when it is determined the embedding vector indicates the action should be executed;
   generating the action indicator, wherein the action indicator comprises the class associated with the action.
4. The method of clause 1, wherein the NLP module comprises a small language model, wherein the small language model is trained to recognise when utterance information within the windowed information indicates that the action should be executed by the virtual assistant system.
5. The method of any preceding clause, wherein the buffer comprises a fixed capacity for storing the windowed information.
6. The method of any preceding clause, wherein the buffer comprises a time-based buffer configured to store utterance information as the windowed information for a predetermined duration after it is provided to the buffer.
7. The method of clause 5 or 6, wherein as the windowed information of the buffer is updated, the method comprises deleting the oldest utterance information from the buffer, if the buffer is at capacity.
8. The method of any preceding clause, wherein the method comprises:
   processing the windowed information using the NLP module to determine whether the windowed information indicates that at least one additional action should be executed by the virtual assistant system;
   providing at least one additional action indicator, each corresponding to the at least one additional action, to the orchestrator module when it is determined that the windowed information indicates that the at least one additional action should be executed by the virtual assistant system;
   using the orchestrator module to cause executing of the at least one additional action using the at least one software module.
9. The method of clause 8, wherein the action and the at least one additional action comprise different types of actions, wherein the at least one software module comprises software modules which correspond to different types of action, wherein the method comprises using the orchestrator module to cause executing of the action and the at least one additional action using the software modules which correspond to the type of action of the action and the type of action of the at least one additional action.
10. The method of any preceding clause, wherein the at least one software module comprises:
   a large language model;
   a python interpreter;
   a large language model-based agent;
   a retrieval-augmented generation process;
   a computer program.
11. The method of any preceding clause, additionally comprising:
   determining, using the orchestrator module, whether the action can be executed based solely on the utterance information in the data stream and the action indicator;
   when it is indicated that the action can be executed based solely on the utterance information in the windowed information and the action indicator, providing at least some of the utterance information in the data stream and the action indicator as inputs to a first software module of the at least one software module, and executing the action using the first software module;
   when it is indicated that further information is required before the action can be executed, providing at least some of the utterance information in the data steam and the action indicator as prompts to a second software module of the at least one software module, the second software module comprising a large language model;
   processing the prompts using the large language model;
   extracting further information required to execute the action at an output of the large language model;
   executing the action using the further information.
12. The method of any preceding clause, additionally comprising;
   generating a transcription of the utterance information associated with the at least one person in natural language as the data stream is received;
   maintaining and updating the transcription of the utterance information as new utterance information is received via the data stream.
13. The method of clause 12, when dependent upon clause 11, wherein when it is indicated that further information is required before the action can be executed, providing at least part of the transcription to the large language model as a prompt.
14. The method of clause 13, comprising processing the prompt comprising at least part of the transcription using the large language model;
   extracting at least one of an action input and action metadata at the output of the large language model for causing execution of the action, wherein the at least one of the action input and action metadata is at least part of the further information.
15. The method of any of clauses 12 to 14, wherein the transcription identifies different speakers from the utterance information in the transcription.
16. The method of any preceding clause, comprising:
   processing the utterance information using a voice detection model;
   determining whether the utterance information comprises words spoken by at least one registered voice registered with the voice detection model and whether the utterance information comprises words spoken by at least one unregistered voice not registered with the voice detection model;
   permitting processing of utterance information within the windowed information using the NLP module for utterance information corresponding to words spoken by the at least one registered voice;
   prohibiting processing of utterance information within the windowed information using the NLP module for utterance information corresponding to words spoken by the at least one unregistered voice.
17. The method of any preceding clause, wherein the data stream comprises at least one of: audio data; text data.
18. The method of any preceding clause, comprising prohibiting of providing the action indicator corresponding to the action to the orchestrator module if it is determined that the action indicator has been previously provided to the orchestrator module within a predetermined historic time period.
19. A virtual assistant system comprising:
   one or more processors collectively configured to:
   receive a data stream comprising utterance information associated with at least one person in natural language;
   update windowed information of a buffer with utterance information from the data stream;
   in response to and following the updating of the buffer, process the windowed information using a NLP module to determine whether the windowed information indicates that an action should be executed by the system;
   provide an action indicator to an orchestrator module when it is determined that the windowed information indicates that the action should be executed;
   use the orchestrator module to cause executing of the action using at least one software module associated with the orchestrator module.
20. The virtual assistant system of clause 19, configured to perform the method of any one of clauses 1 to 18.
21. The virtual assistant system of clause 19 or clause 20, wherein the NLP module is quantized.
22. The virtual assistant system of any one of clauses 20 to 21, additionally comprising one or more of: the NLP module; the orchestrator module; the at least one software module.
23. The virtual assistant system of any one of clauses 19 to 22, additionally configured to:
   receive a text input via a user interface;
   process the text input using the NLP module to determine whether the text input indicates an auxiliary action should be executed by the virtual assistant system;
   provide an auxiliary action indicator to the orchestrator module when it is determined that the text input indicates that the auxiliary action should be executed;
   use the orchestrator module to cause executing of the auxiliary action using at least one software module associated with the orchestrator module.

## Claims

1. A computer-implemented method comprising:
receiving a data stream comprising utterance information associated with at least one person in natural language;
updating windowed information within a buffer with utterance information from the data stream;
in response to and following the updating of the buffer, processing the windowed information using a NLP module to determine whether the windowed information indicates that an action should be executed by a virtual assistant system;
providing an action indicator corresponding to the action to an orchestrator module when it is determined that the windowed information indicates that the action should be executed by the virtual assistant system;
using the orchestrator module to cause executing of the action using at least one software module.

2. The method of claim 1, wherein the NLP module comprises an embedding model, wherein the processing of the windowed information comprises:
encoding the windowed information into an embedding vector,
obtaining a set of reference embedding vectors, the set of reference embedding vectors relating reference information to the action;
performing a similarity calculation between the embedding vector and the set of reference embedding vectors;
wherein when the similarity calculation indicates the similarity between the embedding vector and at least one embedding vector from the set of reference embedding vectors passes a similarity threshold, it is determined that the information indicates that the action should be executed by the virtual assistant system.

3. The method of claim 1, wherein the NLP module comprises: an embedding model, an action classifier trained to classify embedding vectors that indicate the action should be executed, wherein the processing of the windowed information comprises:
encoding the windowed information into an embedding vector,
processing the embedding vector using the action classifier;
determining, using the action classifier, if the embedding vector indicates the action should be executed;
classifying the embedding vector as a class associated with the action when it is determined the embedding vector indicates the action should be executed;
generating the action indicator, wherein the action indicator comprises the class associated with the action.

4. The method of claim 1, wherein the NLP module comprises a small language model, wherein the small language model is trained to recognise when utterance information within the windowed information indicates that the action should be executed by the virtual assistant system.

5. The method of any preceding claim, wherein the buffer comprises a fixed capacity for storing the windowed information, wherein optionally as the windowed information of the buffer is updated, the method comprises deleting the oldest utterance information from the buffer, if the buffer is at capacity.

6. The method of any preceding claim, wherein the buffer comprises a time-based buffer configured to store utterance information as the windowed information for a predetermined duration after it is provided to the buffer, wherein optionally as the windowed information of the buffer is updated, the method comprises deleting the oldest utterance information from the buffer, if the buffer is at capacity.

7. The method of any preceding claim, wherein the method comprises:
processing the windowed information using the NLP module to determine whether the windowed information indicates that at least one additional action should be executed by the virtual assistant system;
providing at least one additional action indicator, each corresponding to the at least one additional action, to the orchestrator module when it is determined that the windowed information indicates that the at least one additional action should be executed by the virtual assistant system;
using the orchestrator module to cause executing of the at least one additional action using the at least one software module, wherein optionally the action and the at least one additional action comprise different types of actions, wherein the at least one software module comprises software modules which correspond to different types of action, wherein the method comprises using the orchestrator module to cause executing of the action and the at least one additional action using the software modules which correspond to the type of action of the action and the type of action of the at least one additional action.

8. The method of any preceding claim, wherein the at least one software module comprises:
a large language model;
a python interpreter;
a large language model-based agent;
a retrieval-augmented generation process;
a computer program.

9. The method of any preceding claim, additionally comprising:
determining, using the orchestrator module, whether the action can be executed based solely on the utterance information in the data stream and the action indicator;
when it is indicated that the action can be executed based solely on the utterance information in the windowed information and the action indicator, providing at least some of the utterance information in the data stream and the action indicator as inputs to a first software module of the at least one software module, and executing the action using the first software module;
when it is indicated that further information is required before the action can be executed, providing at least some of the utterance information in the data steam and the action indicator as prompts to a second software module of the at least one software module, the second software module comprising a large language model;
processing the prompts using the large language model;
extracting further information required to execute the action at an output of the large language model;
executing the action using the further information.

10. The method of any preceding claim, additionally comprising;
generating a transcription of the utterance information associated with the at least one person in natural language as the data stream is received;
maintaining and updating the transcription of the utterance information as new utterance information is received via the data stream,
wherein optionally the transcription identifies different speakers from the utterance information in the transcription.

11. The method of claim 10, when dependent upon claim 9, wherein when it is indicated that further information is required before the action can be executed, providing at least part of the transcription to the large language model as a prompt, optionally further comprising processing the prompt comprising at least part of the transcription using the large language model;
extracting at least one of an action input and action metadata at the output of the large language model for causing execution of the action, wherein the at least one of the action input and action metadata is at least part of the further information.

12. The method of any preceding claim, comprising:
processing the utterance information using a voice detection model;
determining whether the utterance information comprises words spoken by at least one registered voice registered with the voice detection model and whether the utterance information comprises words spoken by at least one unregistered voice not registered with the voice detection model;
permitting processing of utterance information within the windowed information using the NLP module for utterance information corresponding to words spoken by the at least one registered voice;
prohibiting processing of utterance information within the windowed information using the NLP module for utterance information corresponding to words spoken by the at least one unregistered voice.

13. The method of any preceding claim, wherein the data stream comprises at least one of: audio data; text data.

14. The method of any preceding claim, comprising prohibiting of providing the action indicator corresponding to the action to the orchestrator module if it is determined that the action indicator has been previously provided to the orchestrator module within a predetermined historic time period.

15. The method of any preceding claim, wherein the NLP module is quantized.

16. A virtual assistant system comprising one or more processors collectively configured to carry out the method of any previous claim.

17. The virtual assistant system of claim 16, additionally configured to:
receive a text input via a user interface;
process the text input using the NLP module to determine whether the text input indicates an auxiliary action should be executed by the virtual assistant system;
provide an auxiliary action indicator to the orchestrator module when it is determined that the text input indicates that the auxiliary action should be executed;
use the orchestrator module to cause executing of the auxiliary action using at least one software module associated with the orchestrator module.
